# FASCICULE DE BREVET EUROPEEN

(11) **EP 3 665 411 B1**
(45) Date de publication et mention de la délivrance du brevet: **06.03.2024**
(21) Numéro de dépôt: 18752830.2
(22) Date de dépôt: 29.07.2018
(51) Int. Cl.: F16L 11/02, F16L 11/10, F16L 11/24

(54) **TUYAU RÉTRACTABLE À BASE D'UN TEXTILE DOUBLE ÉTOFFE**
EINZIEHBARER SCHLAUCH AUF BASIS EINES TEXTILS AUS EINEM DOPPELGEWEBE
RETRACTABLE HOSE BASED ON A DOUBLE FABRIC TEXTILE

(30) Priorité: 07.08.2017 FR 1757562
(43) Date de publication de la demande: 17.06.2020
(73) Titulaire: Serge Ferrari SAS, 38110 Saint Jean de Soudain (FR)
(72) Inventeur: SAIZ, Carlos, 73190 Challes Les Eaux (FR)
(74) Mandataire: Cabinet Laurent & Charras
(86) Numéro de dépôt international: PCT/FR2018/051952
(87) Numéro de publication internationale: WO 2019/030444

(56) Documents cités:
- EP-A1- 0 814 291
- FR-A- 1 423 500
- US-A- 2 874 722

## Description

### DOMAINE DE L'INVENTION

La présente invention concerne l'industrie des canalisations flexibles. En particulier, la présente invention concerne un tuyau rétractable.

On entend par tuyau rétractable un tuyau dont la longueur peut être ajustée pour minimiser le volume de celui-ci lorsqu'il n'est pas utilisé, ou plus spécifiquement pour ajuster sa longueur de service.

### ÉTAT ANTÉRIEUR DE LA TECHNIQUE

Les tuyaux rétractables sont particulièrement avantageux vis-à-vis des tuyaux rigides car leur stockage et leur transport nécessitent un volume beaucoup moins important. Par ailleurs, la longueur d'un tuyau rétractable peut être facilement ajustée en fonction de son site d'utilisation par un simple positionnement, contrairement à un tuyau classique qui doit être découpé à sa longueur utile exacte.

On connaît les tuyaux rétractables utilisés dans les conduites d'aération ou encore de climatisation. Ces tuyaux sont généralement composés d'un ruban souple de PVC soudé par ses lisières en forme d'hélice cylindrique et d'un fil métallique également en forme d'hélice cylindrique et présentant le même pas.

Cependant, ces tuyaux présentent une résistance mécanique limitée qui ne permet pas une utilisation de ceux-ci dans des applications où les tuyaux subissent des contraintes élevées et des agressions répétées comme par exemple les applications sous-marines. Par ailleurs, ces tuyaux sont prévus pour être positionnés de manière permanente dans une installation. Ces tuyaux sont donc prévus pour être ajustés à la longueur nécessaire à leur utilisation en fonction de l'installation dans laquelle ils sont positionnés, mais ne sont pas destinés à être allongés et rétractés à plusieurs reprises.

Il existe donc un besoin d'obtenir un tuyau rétractable, présentant une résistance mécanique suffisante, qui peut être allongé et rétracté à de nombreuses reprises.

D'autre part, le document US 2 874 722 divulgue un tuyau flottant isolant et flexible. Ce tuyau comprend des zones gonflables (20) et un câble de renfort (35, 36). Selon un premier mode de réalisation illustré par les figures 2 et 3, les parois des zones gonflables sont réalisées avec une unique feuille d'un matériau élastique, les lisières étant assemblées entre elles par collage ou soudure. Selon un second mode de réalisation illustré par les figures 8 et 9, les parois des zones gonflables sont réalisées avec deux feuilles différentes d'un matériau élastique, assemblées entre elles par collage ou soudure. Quoi qu'il en soit, le tuyau décrit dans US 2 874 722 n'est pas réalisé avec un textile double étoffe comprenant des « régions où les deux étoffes travaillent entre elles », qui est une caractéristique essentielle de l'invention.

### EXPOSE DE L'INVENTION

Afin de répondre à ce besoin, la Demanderesse a mis au point un tuyau rétractable à base d'un textile double étoffe. En particulier, le textile double étoffe est enduit et comporte des zones gonflables.

L'invention concerne un tuyau rétractable selon la revendication 1, dont la paroi est formée d'au moins un ruban souple imperméable aux gaz et/ou aux liquides soudé par ses lisières en forme d'hélice cylindrique et d'au moins un fil métallique en forme d'hélice cylindrique de pas identique à celle formée par ledit ruban, caractérisé en ce que ledit ruban est un textile double étoffe comportant au moins deux régions où les deux étoffes travaillent entre elles de manière à délimiter entre elles au moins une zone gonflable, les jeux de fils de chaîne et de fils de trame se dédoublant dans les zones gonflables de sorte à tisser deux étoffes et se regroupant dans les régions où les deux étoffes travaillent entre elles de sorte à tisser une seule étoffe, ledit textile étant recouvert d'une couche d'enduction d'un matériau imperméable aux gaz et/ou aux liquides.

Un avantage de l'invention est l'obtention d'un tuyau rétractable présentant une bonne résistance mécanique grâce au textile enduit.

Un autre avantage de l'invention est la possibilité d'allonger ou de rétracter le tuyau de manière précise et à de nombreuses reprises grâce à l'ajustement du taux de gonflement desdites zones gonflables.

Le textile formant le ruban apporte de nombreux avantages en comparaison de l'art antérieur. En premier lieu celui-ci peut être obtenu industriellement sans assemblage ultérieur car les zones gonflables et les régions où les deux étoffes travaillent entre elles sont réalisées avec l'intégralité des fils de chaîne et des fils de trame. Les jeux de fils de chaine et de fils de trame se dédoublent dans les zones gonflables de sorte à tisser deux étoffes et se regroupent dans les régions où les deux étoffes travaillent entre elles de sorte à tisser une seule étoffe. Le textile tissé présente donc en sortie de métier à tisser des zones avec deux étoffes et des régions avec une seule étoffe, l'ensemble formant un seul et unique tissu.

Ce tissage particulier confère une résistance mécanique intrinsèque à la pression par croisement des fils de chaîne et des fils de trame lors du tissage. Cette résistance à la pression statique et à la fatigue est sans comparaison avec les résistances des membranes obtenues par collage, soudure ou couture qui se délaminent lors de mise sous pression trop importante.

Conformément à l'invention, la paroi du tuyau rétractable est formée par un ruban imperméable aux gaz et/ou aux liquides et est soudé par ses lisières en forme d'hélice cylindrique. La taille du cylindre et le pas de l'hélice du ruban dépendent de l'application souhaitée. L'homme du métier comprend qu'un tuyau utilisé pour pomper de gros volumes d'eau de mer à basse profondeur présentera des dimensions sans commune mesure avec un tuyau utilisé pour arroser un jardin.

Conformément à l'invention, ledit ruban est un textile double étoffe. On entend par textile double étoffe un textile dont les fils de chaine et de trame sont dans certaines zones du textile séparés en sous-ensembles qui sont tissés indépendamment pour former deux étoffes qui sont reliées par les zones où tous les fils travaillent ensemble.

Le textile double étoffe selon l'invention comporte donc au moins deux régions où les deux étoffes travaillent entre elles de manière à délimiter entre elles au moins une zone gonflable.

On entend par région où les deux étoffes travaillent entre elles une région où tous les fils de trame et tous les fils de chaine travaillent ensemble, par opposition avec les zones gonflables où les fils de chaine et de trame sont séparés en sous-ensembles tissés indépendamment.

Ainsi, dans les régions où les deux étoffes travaillent entre elles, tous les fils de trame et tous les fils de chaine travaillent ensemble. En d'autres termes, dans les régions où les deux étoffes travaillent entre elles, une seule étoffe est apparente.

En revanche, les zones gonflables présentent deux étoffes séparées, car une première partie des fils de trame travaillent avec une première partie des fils de chaîne et une seconde partie des fils de trame travaillent avec une seconde partie des fils de chaine.

Ainsi, dans les zones gonflables, on observe deux étoffes disjointes et, dans les régions où les deux étoffes travaillent entre elles on observe une seule étoffe.

On entend par zone gonflable une zone dans laquelle un fluide, qui peut être un gaz ou un liquide peut être introduit et confiné.

Le textile double étoffe formant la paroi du tuyau selon l'invention doit présenter une résistance mécanique tout en présentant une bonne souplesse. En effet, le tuyau doit résister à la différence de pression qui peut apparaitre entre l'intérieur et l'extérieur du tuyau. Ainsi, le tuyau ne doit pas s'affaisser sur lui-même quand la pression interne du tuyau est inférieure à la pression externe, lorsque le tuyau est utilisé pour aspirer un fluide. Et il ne doit pas se disloquer quand le tuyau est employé en sortie d'une installation de pompage. Cette résistance du tuyau, doit se combiner avec une grande souplesse du textile permettant au tuyau d'être rangé et compacté dans sa longueur lorsque les zones gonflables sont vidées.

Ainsi, lorsque le textile double étoffe n'est pas gonflé, le tuyau peut être rassemblé axialement en contrariant l'effet ressort du fil métallique, , et par conséquent, on minimise ainsi l'encombrement du tuyau lorsqu'il n'est pas utilisé.

Dans le cas où le tuyau est gonflé à partir d'une position entièrement déployée, les deux étoffes des zones gonflables s'écartant du plan médian de la paroi, la distance entre deux zones où les étoffes travaillent entre elles successives est diminuée. En effet, le gonflage provoque la déformation des zones gonflables ce qui induit une déformation de la paroi du tuyau. Ainsi, à partir d'un tuyau entièrement déployé et non gonflé, le gonflage provoque la diminution de la longueur du tuyau. Par conséquent, le taux de gonflement de ladite zone gonflable est corrélé de manière directe à la taille du tuyau. Ainsi, la taille du tuyau peut être ajustée à la longueur nécessaire à son utilisation en fonction de son taux de gonflement.

Dans un mode de réalisation particulier de l'invention, la paroi du tuyau rétractable selon l'invention est formée de deux rubans. Pour un tuyau rétractable de même longueur minimale et maximale, le diamètre interne et externe seront plus grands lorsque deux rubans forment la paroi. En effet, dans le cas de l'utilisation de deux rubans, les zones gonflables sont plus petites et l'encombrement de ces zones gonflables à l'intérieur du tuyau est moindre. Ainsi, à la même vitesse de circulation de fluide, la réduction de section due au gonflage des zones gonflables est moindre que dans les constructions à un seul ruban, et un débit plus grand de fluide peut être atteint. En d'autres termes, l'utilisation d'un tuyau rétractable dont la paroi est formée de deux rubans permet d'avoir à même vitesse un débit plus important de fluide que dans un tuyau rétractable formé d'un seul ruban. Bien entendu, l'invention couvre également les variante où le tuyau est réalisé avec un nombre de rubans similaires supérieur à deux, avec un avantage résidant en l'augmentation du diamètre intérieur et donc une diminution des pertes de charges favorables au bilan énergétique de l'installation utilisant le tuyau.

Conformément à l'invention, le textile double étoffe est recouvert d'une couche d'enduction imperméable au gaz et/ou aux liquides sur ses faces externes. Il est important que la couche d'enduction ne se déforme pas sous la contrainte de la pression. En d'autres termes, il est important que le textile enduit soit inextensible et non élastique.

Cependant, le textile doit présenter une certaine souplesse pour pouvoir être gonflé sans endommager la couche d'enduction.

Ainsi, de manière avantageuse, la couche d'enduction a une épaisseur comprise entre 50 µm et 400 µm, de préférence comprise entre 100 µm et 200 µm.

De manière à maximiser l'étanchéité du textile double étoffe il faut minimiser l'embuvage des fils de trame. De manière avantageuse, le textile double étoffe selon l'invention présente un embuvage en trame inférieur ou égal à 1 %.

La couche d'enduction est à base d'un polymère choisi dans le groupe comprenant le chlorure de polyvinyle (PVC), le polyuréthane, et en général tous les thermoplastiques enductibles et la silicone.

Conformément à l'invention, la paroi inclut au moins un fil métallique. Le fil métallique est également en forme d'hélice cylindrique. La taille du cylindre et le pas de l'hélice du fil métallique sont identiques à ceux de l'hélice cylindrique du ruban. Le fil métallique permet de maintenir le tuyau dans une forme cylindrique lorsque le tuyau n'est pas gonflé. Ceci permet de minimiser les contraintes mécaniques subies par le textile double étoffe. Par ailleurs, la forme de l'hélice cylindrique du fil métallique doit s'adapter à la forme de l'hélice cylindrique du textile double étoffe lors du gonflage et du dégonflage du textile.

Ainsi, il est préférable que le fil métallique présente une bonne résistance mécanique mais également une souplesse permettant sa déformation lors du gonflage et du dégonflage du textile. De manière avantageuse, ledit fil métallique est en acier, avantageusement en acier inoxydable dans le cas d'un emploi en milieu aqueux, marin notamment.

Le fil métallique peut être incorporé à la paroi du tuyau rétractable selon l'invention de différentes manières. De préférence, le fil métallique est positionné entre deux lignes de soudures de manière à être maintenu au contact dudit ruban.

Dans un mode de réalisation préféré de l'invention, le fil métallique est positionné entre deux lisières dudit ruban soudées l'une à l'autre. En pratique, le fil métallique est positionné sur une première lisière dudit textile, puis la lisière venant en regard de ladite première lisière est positionnée au-dessus dudit fil métallique, les deux lisières dépassant de chaque côté du fil métallique. Les deux lisières sont ensuite soudées ce qui emprisonne ledit fil métallique entre elles.

Dans le cas où la paroi est formée de deux rubans, ledit fil métallique est avantageusement positionné entre une lisière d'un desdits rubans et une lisière de l'autre desdits rubans soudées l'une à l'autre. En pratique, le fil métallique est positionné sur une première lisière dudit textile d'un des deux rubans puis la lisière dudit textile de l'autre ruban venant en regard de ladite première lisière est positionnée au-dessus dudit fil métallique, les deux lisières dépassant de chaque côté du fil métallique. Les deux lisières sont ensuite soudées ce qui emprisonne ledit fil métallique entre elles.

Dans un autre mode de réalisation préféré de l'invention, ledit fil métallique est positionné entre une des régions où les deux étoffes travaillent entre elles et une bande supplémentaire soudée à la paroi. En pratique, le fil métallique est positionné sur une région où les deux étoffes travaillent entre elles, puis est recouvert par une bande dépassant de chaque côté dudit fil. La bande est ensuite soudée à la paroi autour dudit fil de manière à emprisonner ledit fil entre ladite bande et la paroi du tuyau rétractable. Dans ce mode de réalisation, ledit fil peut être positionné sur la face externe ou sur la face interne de la paroi du tube. De manière avantageuse, ledit fil est positionné sur la face interne, dans ce cas, ledit fil reste contenu dans le tube et la force exercée sur ladite bande supplémentaire est moindre quand dans le cas où ledit fil est positionné sur la face externe de la paroi.

Dans un mode de réalisation préféré de l'invention, un film élastique recouvre l'ensemble de la paroi à l'intérieur dudit tuyau, ledit film élastique étant soudé audit textile au niveau de ladite zone gonflable.

En d'autres termes, la paroi interne du tuyau est rendue lisse par l'intermédiaire d'un film élastique qui s'étend et qui se rétracte en même temps que le tuyau rétractable selon l'invention.

Ce mode de réalisation permet de canaliser le flux de fluide à l'intérieur du tuyau rétractable selon l'invention en éliminant les obstacles représentés par ladite zone gonflable lorsqu'elle est gonflée. Ainsi, le régime à l'intérieur du tuyau est plus laminaire et moins turbulent.

Dans un autre mode de réalisation particulier de l'invention, une chambre à air est positionnée dans lesdites zones gonflables. La pression exercée sur les fils lorsque les zones gonflables sont gonflées, les endommagements tels que les fissures et les cassures peuvent rendre le textile poreux voir perméable. Il est donc avantageux d'utiliser une chambre à air qui assure l'étanchéité nécessaire au gonflement des zones gonflables. Par ailleurs, grâce à l'utilisation d'une chambre à air il peut être possible d'utiliser des textiles qui peuvent ne pas être fortement imperméables au fluide remplissant les zones gonflables.

Le tuyau rétractable selon l'invention est particulièrement adapté pour pomper de l'eau de mer à différentes profondeurs selon les besoins de l'exploitation.

Par exemple, le pompage de l'eau de mer en profondeur pour servir de fluide dans des systèmes de climatisations est en plein essor. Afin de contrôler la température de la climatisation il est nécessaire de pouvoir introduire de l'eau à différentes températures. La longueur du tuyau rétractable selon l'invention étant ajustable in situ, il suffit d'augmenter la longueur dudit tuyau si l'on souhaite diminuer la température de la climatisation en pompant de l'eau plus froide à une plus grande profondeur.

De manière avantageuse, le tuyau rétractable selon l'invention est associé à un dispositif de filtration. Ce mode de réalisation permet, entre autres, de filtrer le fluide avant que celui-ci ne pénètre dans ledit tuyau.

Dans le cas par exemple du domaine des cages à poissons, l'eau pompée dans la mer ou l'océan doit contenir un maximum de nutriments pour nourrir les poissons et il faut empêcher les méduses d'entrer. Avec le tuyau selon l'invention associé à un système de filtration, il est possible d'allonger ou de rétracter le tuyau pour pomper l'eau à l'endroit optimal vis-à-vis de la nutrition des poissons tout en filtrant l'eau et ainsi éviter de faire entrer des méduses dans la cage à poisson.

### DESCRIPTION SOMMAIRE DES FIGURES

La manière de réaliser l'invention, ainsi que les avantages qui en découlent, ressortiront bien de la description des modes de réalisations qui suivent, à l'appui des figures annexées dans lesquelles :

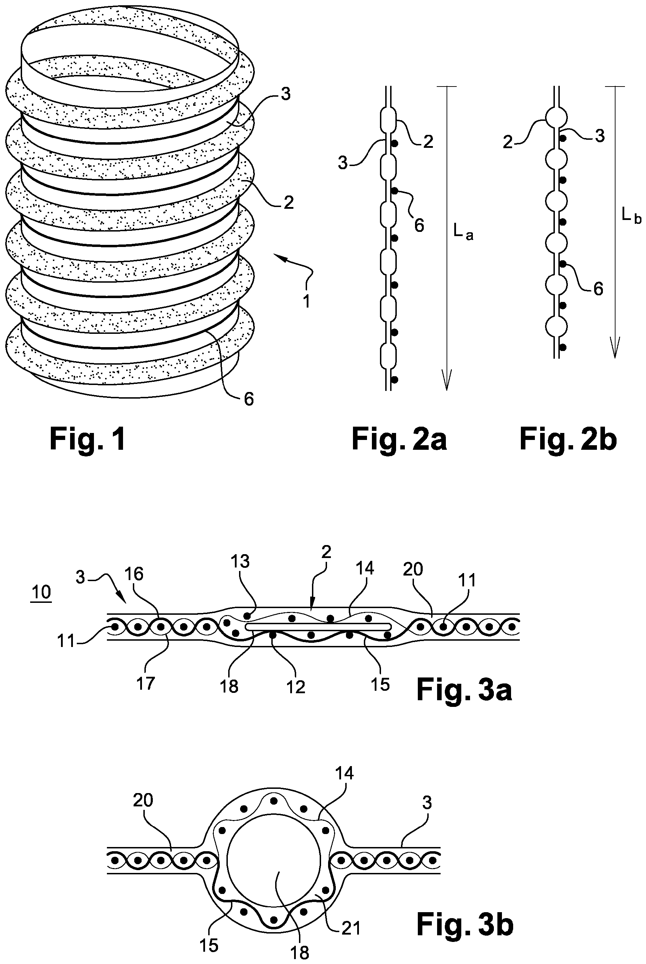

- la figure 1 est une vue en perspective sommaire d'un tuyau conforme à l'invention, montré dans une configuration gonflée,
- les figures 2a et 2b sont des vues en coupe longitudinale du tuyau de la figure 1, montrant le tuyau dans les configurations respectivement non gonflée et gonflée,
- les figures 3a et 3b sont des vues en coupe schématiques de détail de la zone gonflable d'un ruban servant à fabriquer le tuyau de la figure 1, montrée respectivement dans des configurations non gonflés et gonflée,

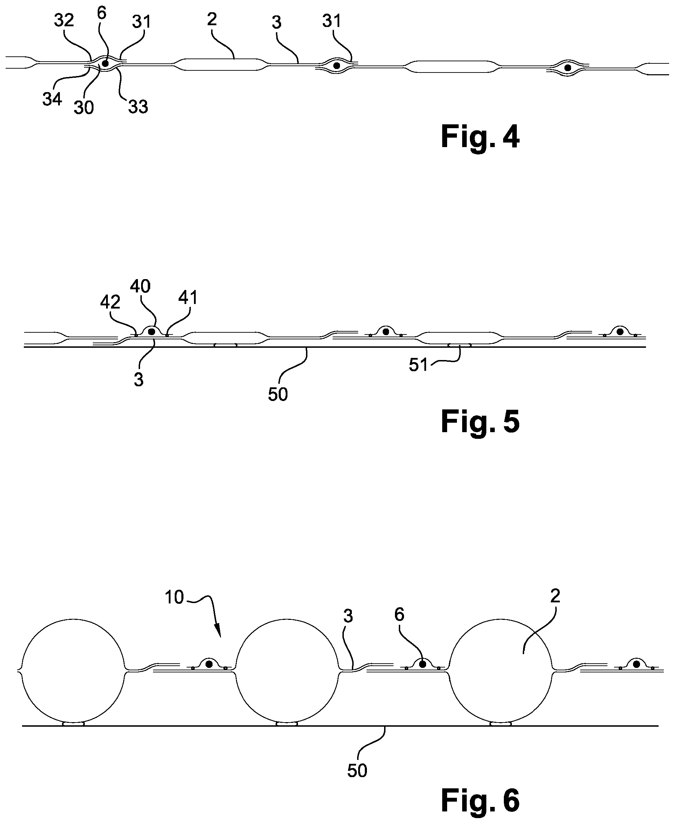

- les figures 4 et 5 sont des vues en coupe transversale montrant l'assemblage de rubans permettant la réalisation d'un tuyau conforme à l'invention, pour plusieurs variantes de solidarisation du fil métallique de renfort.
- La figure 6 est une vue analogue à la figure 5, dans laquelle les zones gonflables sont montrées gonflées.

Bien entendu, les dimensions et les proportions des éléments illustrés aux figures 1 à 6 ont pu être exagérées par rapport à la réalité, et n'ont été données que dans le but de faciliter la compréhension de l'invention.

### DESCRIPTION DÉTAILLÉE

Comme illustré à la figure 1, l'invention concerne un tuyau rétractable 1 qui présente une forme générale cylindrique lorsqu'il est en conditions d'utilisation. Pour ce faire, le tuyau comporte une zone gonflable 2, qui s'étend sur la paroi du tuyau en formant une hélice cylindrique.

Complémentairement, le tuyau comporte également un fil métallique 6, qui permet d'assurer un certain maintien en forme du tuyau, notamment lorsque des contraintes radiales sont exercées sur le tuyau, du fait d'une différence de pression entre les régions internes et externes du tuyau.

Comme déjà évoqué, le tuyau 1 est constitué par l'enroulement en spirale hélicoïdale d'un ruban élémentaire 10, réalisée à base d'un textile enduit, comme illustré à la figure 3a.

Comme illustré de façon schématique, ce textile enduit présente une zone gonflable 2 dans laquelle le tissu est séparé en deux étoffes distinctes. Plus précisément, dans ses zones latérales, le textile comporte des fils de chaîne 11 qui sont tissées avec l'ensemble des fils de trame 16, 17. Les régions 3 dans lesquelles le textile ne présente qu'une étoffe forment des zones indéformables du ruban, qui définissent la dimension médiane du diamètre du tuyau.

Dans sa partie centrale, les fils de chaîne sont séparés en deux nappes indépendantes, de telle sorte qu'une partie des fils de trame 14 travaille avec une moitié des fils de chaîne 13, tandis que l'autre nappe de fils de trame 15 travaille avec une autre moitié des fils de chaîne 12. Dans cette configuration, la zone gonflable 2 du ruban présente deux étoffes, entre lesquels est défini un espace 18, qui comme illustré à la figure 3b peut être gonflée par un fluide, pour adopter une forme renflée, de section typiquement circulaire, elliptique ou analogues.

Du fait que le textile est un textile enduit, qui possède une couche 20 d'un matériau d'enduction, il présente une étanchéité vis-à-vis des fluides, entre l'intérieur et l'extérieur du tuyau, mais également entre le volume 18 défini dans la zone gonflable du tuyau et l'extérieur ainsi que l'intérieur du tuyau lui-même.

La zone gonflable 2 étant constituée par une structure continue que forment les fils de chaîne, elle présente une grande résistance à la déchirure, et même à l'allongement, ce qui permet de limiter les contraintes qui s'exercent sur la couche d'enduction 20 sur laquelle repose l'étanchéité.

Toutefois, cette étanchéité peut également être renforcée dans une variante non représentée aux figures par l'insertion dans le volume 18 gonflable, d'une membrane tubulaire étanche, type chambre à air ou analogue.

Comme illustré à la figure 2, lorsque les différentes zones gonflables 2 sont dégonflées, le tuyau présente une configuration allongée, puisque les étoffes définissant la zone gonflable 2 sont sensiblement parallèles. En revanche, lorsque les zones gonflables 2 sont gonflées, comme illustré à la figure 2b, alors ces zones gonflables adoptent une forme de section sensiblement circulaire, de sorte que le tuyau passe d'une longueur Lₐ à une longueur L_{b}. Selon les dimensions respectives des zones gonflables 2 et régions inextensibles 3, le rapport L_{b}/Lₐ peut-être de l'ordre de 1/1,5 soit de l'ordre de 65%

Comme déjà évoqué, le tuyau 1 inclut un fil métallique 6 de maintien en forme. Dans le mode de réalisation illustré à la figure 4, ce fil métallique 6 est également enroulé en hélice, d'un pas identique à celui du ruban 10. Ce fil 6 est solidarisé au tuyau par les soudures 32, 33 des lisières 30, 31 de tours consécutifs du ruban 10. Ces deux soudures 32, 33, réalisées de part et d'autres du fil 6 créent ainsi une gaine 34 dans laquelle le fil 6 est emprisonné.

Dans une autre variante illustrée à la figure 5, la solidarisation du fil métallique 6 par rapport au ruban 10 est réalisée par l'ajout d'une bande 40 supplémentaire soudée par ses deux lisières 41, 42 à la portion planes 3 du ruban.

Bien entendu, pour donner plus de force élastique à la conduite tout en sauvegardant sa souplesse il est également possible de prévoir plusieurs fils métalliques enroulés en spirale, disposés côte à côte ou préférentiellement dans deux zones distinctes du ruban, afin d'améliorer la tenue à l'écrasement radial du tuyau.

Dans le mode de réalisation illustré à la figure 5, la face intérieure du tuyau est équipée d'un film élastique 50, qui est solidarisé à la face interne du tuyau au niveau de soudures 51 réalisées sur la zone gonflable, au niveau des zones qui s'éloigneront le plus du cylindre formé par les zones inextensibles 3 du ruban.

De la sorte, comme illustré à la figure 6, lorsque les zones gonflables 2 sont gonflées, le film élastique 50 se rétracte pour former du côté intérieur du tuyau, une paroi sensiblement cylindrique, évitant la perturbation du flux du fluide par la présence des excroissances que forment les zones gonflables.

## Revendications

1. Tuyau rétractable (1) dont la paroi est formée d'au moins un ruban souple imperméable aux gaz et/ou aux liquides soudé par ses lisières en forme d'hélice cylindrique et d'au moins un fil métallique (6) en forme d'hélice cylindrique de pas identique à celle formée par ledit ruban, **caractérisé en ce que** ledit ruban est un textile double étoffe comportant au moins deux régions où les deux étoffes travaillent entre elles (3) de manière à délimiter entre elles au moins une zone gonflable (2), les jeux de fils de chaîne et de fils de trame se dédoublant dans les zones gonflables (2) de sorte à tisser deux étoffes et se regroupant dans les régions (3) où les deux étoffes travaillent entre elles de sorte à tisser une seule étoffe, ledit textile étant recouvert d'une couche d'enduction (20) d'un matériau imperméable aux gaz et/ou aux liquides.

2. Tuyau selon la revendication 1, **caractérisé en ce que** ledit fil métallique (6) est en acier.

3. Tuyau selon l'une des revendications précédentes, **caractérisé en ce que** la paroi est formée d'au moins deux rubans.

4. Tuyau selon l'une des revendications 1 ou 2, **caractérisé en ce que** ledit fil métallique (6) est positionné entre deux lisières (31, 32) dudit ruban soudées l'une à l'autre.

5. Tuyau selon la revendication 3, **caractérisé en ce que** ledit fil métallique (6) est positionné entre une lisière (31) d'un desdits rubans et une lisière (32) de l'autre desdits rubans soudées l'une à l'autre.

6. Tuyau selon l'une des revendications 1 à 3, **caractérisé en ce que** ledit fil métallique (6) est positionné entre une des régions où les deux étoffes travaillent entre elles (3) et une bande (40) soudée sur ladite paroi.

7. Tuyau selon l'une des revendications précédentes, **caractérisé en ce qu'**un film élastique (50) recouvre l'ensemble de la paroi à l'intérieur dudit tuyau, ledit film élastique étant soudé audit textile au niveau de ladite zone gonflable (2).

8. Tuyau selon l'une des revendications précédentes, **caractérisé en ce qu'**une chambre à air est positionnée dans lesdites zones gonflables.

9. Tuyau selon l'une des revendications précédentes, **caractérisé en ce qu'**il est associé à un dispositif de filtration.

## Patentansprüche

1. Ausziehbarer Schlauch (1), dessen Wand aus mindestens einem gas- und/ oder flüssigkeitsdichten flexiblen Band besteht, verschweißt an seinen Kanten in Form zylinderförmiger Wendel und mindestens einem Metalldraht (6) in Form eines zylinderförmigen Wendels mit gleicher Steigung wie die, die von dem erwähnten Band geformt werden, **dadurch gekennzeichnet, dass** es sich bei dem erwähnten Band um ein Textilelement aus zwei Stofflagen handelt, das mindestens zwei Bereiche enthält, in denen die beiden Stofflagen miteinander (3) so zusammenarbeiten, dass zwischen ihnen mindestens eine aufblasbare Zone (2) umgrenzt wird, die Gruppen von Kett- und Schussfäden werden in den aufblasbaren Zonen (2) verdoppelt, so dass zwei Stofflagen gewebt werden und kommen in den Bereichen (3), in denen die beiden Stofflagen zusammenarbeiten, wieder zusammen, so dass eine einzige Stofflage gewebt wird, dieses Textilelement ist (20) mit einem gas- und/ oder flüssigkeitsdichten Material beschichtet.

2. Schlauch nach Anspruch 1, **dadurch gekennzeichnet, dass** der erwähnte Metalldraht (6) aus Stahl besteht.

3. Schlauch nach einem der vorangehenden Ansprüche, **dadurch gekennzeichnet, dass** die Wand aus mindestens zwei Bändern gebildet wird.

4. Schlauch nach einem der Ansprüche 1 oder 2, **dadurch gekennzeichnet, dass** dieser Metalldraht (6) zwischen zwei Kanten (31, 32) dieses Bandes angeordnet ist, die miteinander verschweißt sind.

5. Schlauch nach Anspruch 3, **dadurch gekennzeichnet, dass** dieser Metalldraht (6) zwischen einer Kante (31) eines dieser Bänder und einer Kante (32) des anderen dieser miteinander verschweißten Bänder angeordnet ist.

6. Schlauch nach einem der Ansprüche 1 bis 3, **dadurch gekennzeichnet, dass** der erwähnte Metalldraht (6) zwischen einem der Bereiche, in denen die beiden Stofflagen zusammenarbeiten (3) und einem auf diese Wand geschweißten Band (40) angeordnet ist.

7. Schlauch nach einem der vorangehenden Ansprüche, **dadurch gekennzeichnet, dass** eine elastische Folie (50) die gesamte Wand dieses Schlauchs innen bedeckt, diese elastische Folie ist mit dem Textilelement in Höhe der erwähnten aufblasbaren Zone (2) verschweißt.

8. Schlauch nach einem der vorangehenden Ansprüche, **dadurch gekennzeichnet, dass** eine Luftkammer in den erwähnten aufblasbaren Zonen angeordnet ist.

9. Schlauch nach einem der vorangehenden Ansprüche, **dadurch gekennzeichnet, dass** er mit einer Filtervorrichtung kombiniert ist.

## Claims

1. Retractable pipe (1) whose wall is formed of at least one flexible gases impermeable and/or liquid impermeable band welded by its selvages in the form of a cylindrical helix and of at least one metal wire (6) in the form of a cylindrical helix whose pitch is the same as the one formed by said band, **characterized in that** said band is a double fabric textile comprising at least two regions where the two fabrics work together (3) to delimit at least one inflatable zone (2), the sets of warp threads and weft threads split in the inflatable zones (2) so as to weave two fabrics and gather again in the regions (3) where the two fabrics work together so as to weave a single fabric, said textile being covered with a coating layer (20) of a gases and/or liquid impermeable material.

2. Pipe of claim 1, **characterized in that** said metal wire (6) is made of steel.

3. Pipe according to one of the previous claim, **characterized in that** the wall is made of at least two bands.

4. Pipe according to claim 1 or 2, **characterized in that** said metal wire (6) is positioned between two selvages (31, 32) of said band welded together.

5. Pipe according to claim 3, **characterized in that** said metal wire (6) is positioned between a selvage (31) of one of said bands and a selvage (32) of the other said band welded together.

6. Pipe according to claims 1 to 3, **characterized in that** said metal wire (6) is positioned one of the area where the two fabrics work together (3) and a band (40) welded on said wall.

7. Pipe according to one of the previous claims, **characterized in that** an elastic film (50) covers the whole wall inside of said pipe, said elastic film being welded to said textile around said inflatable zone (2).

8. Pipe according to one of the previous claims, **characterized in that** an air chamber is positioned inside said inflatable area.

9. Pipe according to one of the previous claims, **characterized in that** it is connected to a filtration device.
